# EUROPÄISCHE PATENTSCHRIFT

(11) **EP 4 200 463 B1**
(45) Veröffentlichungstag und Bekanntmachung des Hinweises auf die Patenterteilung: **27.03.2024**
(21) Anmeldenummer: 21765872.3
(22) Anmeldetag: 17.08.2021
(51) Int. Cl.: H02J 1/10, C25B 1/04, C25B 15/00

(54) **PHOTOVOLTAISCH GESPEISTE ELEKTROLYSE**
PHOTOVOLTAICALLY SUPPLIED ELECTROLYSIS
ÉLECTROLYSE ALIMENTÉE PAR VOIE PHOTOVOLTAÏQUE

(30) Priorität: 18.08.2020 DE 102020121593
(43) Veröffentlichungstag der Anmeldung: 28.06.2023
(73) Patentinhaber: SMA Solar Technology AG, 34266 Niestetal (DE)
(72) Erfinder: PUTZ, Martin, 34119 Kassel (DE); FALK, Andreas, 34131 Kassel (DE)
(86) Internationale Anmeldenummer: PCT/EP2021/072848
(87) Internationale Veröffentlichungsnummer: WO 2022/038146

(56) Entgegenhaltungen:
- EP-A1- 3 252 947
- WO-A1-2019/246433

## Beschreibung

Die Erfindung betrifft eine Vorrichtung zur Elektrolyse mittels photovoltaisch erzeugter Gleichstromleistung sowie ein Betriebsverfahren für eine solche Vorrichtung.

Als Elektrolyseur wird eine Vorrichtung bezeichnet, in der mit Hilfe elektrischen Stromes eine chemische Reaktion, also eine Stoffumwandlung, herbeigeführt wird. Es findet eine Elektrolyse statt. Bei der Wasserelektrolyse findet die Zerlegung von Wasser in Wasserstoff und Sauerstoff statt. Es gibt Vorschläge, Photovoltaik-Generatoren (PV-Generatoren) mit Hilfe eines Gleichspannungswandlers an einen Elektrolyseur anzubinden.

Ein Gleichspannungswandler bezeichnet eine elektrische Schaltung, die eine am Eingang zugeführte Gleichspannung in eine Gleichspannung mit höherem, niedrigerem oder invertiertem Spannungsniveau umwandelt. Die Umsetzung erfolgt mithilfe eines periodisch arbeitenden elektronischen Schalters und eines oder mehrerer Energiespeicher. Gleichspannungswandler zählen zu den selbstgeführten Stromrichtern, sie werden auch als Gleichstromsteller bezeichnet.

Eine Photovoltaik-Anlage (PV-Anlage) kann eine Vielzahl an elektrischen Komponenten, insbesondere an PV-Modulen umfassen, die in dezentraler Weise über eine große Fläche verteilt sind. Eine Gruppe von PV-Modulen, die stringweise, also untereinander in Form einer Reihenschaltung, gruppiert ist, wird auch PV-String genannt. Mehrere PV-Strings, die parallel zueinander verschaltet sind, werden als PV-Hauptstring bezeichnet. Mehrere PV-Hauptstrings, die parallel zueinander verschaltet sind, werden als PV-Teilgenerator bezeichnet. Ein PV-Generator einer PV-Anlage kann einen oder mehrere PV-Teilgeneratoren aufweisen, die parallel zueinander verschaltet sind.

Häufig wird der PV-Generator bei Großanlagen über 500 kW über einen GFDI (ground fault detection interruption) geerdet oder der PV-Generator wird ungeerdet betrieben. Dies bringt Restriktionen bei der Systemauslegung mit sich. Es ist insbesondere der Standard UL62109 zu beachten.

Die Elektrolyseuren zugeführte elektrische Leistung muss angepasst auf die Leistungsaufnahme der Elektrolyseure gewählt werden. Elektrolyseure haben z. B. typischerweise eine Leistungsaufnahme von 1 bis 20 MW. Die zugeführte elektrische Leistung muss entsprechend darauf ausgelegt sein.

Die Dokumente WO 2019/246433 A1 und EP 3 252 947 A1 zeigen den Stand der Technik.

Aufgabe der Erfindung ist, die Realisierung einer Versorgung eines Elektrolyseurs mit einer möglichst hohen, bedarfsgerecht skalierbaren Leistung aus Photovoltaik (PV).

Die Aufgabe wird durch eine Vorrichtung mit den Merkmalen des Patentanspruchs 1 und durch ein Verfahren mit den Merkmalen des Patentanspruchs 14 gelöst. Bevorzugte Ausführungsformen sind in den abhängigen Patentansprüchen angegeben.

Eine Vorrichtung zur Elektrolyse aus photovoltaisch erzeugter Gleichstromleistung umfasst einen Elektrolyseur und einen Gleichspannungswandler sowie zumindest einen PV-Teilgenerator. Der Elektrolyseur ist beispielsweise ein Wasserelektrolyseur zur Zerlegung von Wasser in Wasserstoff und Sauerstoff. Der Gleichspannungswandler ist eingerichtet, dem Elektrolyseur über einen DC-Bus Gleichstromleistung zuzuführen, wobei die Gleichstromleistung durch einen an den Gleichspannungswandler angeschlossenen photovoltaischen Teilgenerator erzeugbar ist. Der Teilgenerator ist über einen ersten Trennschalter der Vorrichtung an den Gleichspannungswandler angeschlossen, wobei der erste Trennschalter mit einer Isolationsüberwachung der Vorrichtung derart gekoppelt ist, dass ein Schließen des ersten Trennschalters eine erfolgreiche Prüfung auf ausreichende Isolation des Teilgenerators voraussetzt. Der Teilgenerator weist einen Hauptstring auf, wobei zwischen dem Hauptstring und dem ersten Trennschalter ein zweiter Trennschalter der Vorrichtung angeordnet ist, der mit einer Überwachung der Vorrichtung eines Fehlerstroms des Hauptstrings derart gekoppelt ist, dass im Falle einer Überschreitung eines vorgebbaren Grenzwerts des Fehlerstroms der zweite Trennschalter geöffnet wird.

Die Vorrichtung ermöglicht es, den Elektrolyseur z. B. mit weicher Erdung über die Elektrolyseflüssigkeit zu realisieren und mit einer möglichst hohen, bedarfsgerecht skalierbaren PV-Leistung zu versorgen. Der Elektrolyseur kann dabei beispielsweise über seine Elektrolyseflüssigkeit am Minuspol oder am Mittelpunkt geerdet sein. Der Erdung kann über einen ohmschen Widerstand im Bereich 1 bis 100 Ohm erfolgen. Eine Ankopplung jeweils zumindest eines PV-Teilgenerators erfolgt über jeweils einen Gleichspannungswandler.

Durch die Vorrichtung kann erreicht werden, einen Elektrolyseur durch einen PV-Teilgenerator mit elektrischer Leistung zu versorgen, wobei ein Erdschluss im PV-Teilgenerator durch die Überwachung des Fehlerstroms des Hauptstrings oder der Hauptstrings des PV-Teilgenerators zuverlässig detektierbar ist und zur Abschaltung des betroffenen PV-Teilgenerators führt. Diese Abschaltung wird durch den zweiten Trennschalter erreicht. Ist ein weiterer PV-Teilgenerator an den Gleichspannungswandler angeschlossen, so weist dieser einen weiteren zweiten Trennschalter mit einer weiteren dem weiteren zweiten Trennschalter zugehörigen Überwachung des Fehlerstroms auf. Diese weitere Überwachung des Fehlerstroms überwacht dann den Fehlerstrom des Hauptstrings oder der Hauptstrings, die dem weiteren PV-Teilgenerator zugeordnet sind. Die Überwachung des Fehlerstroms ist z. B. als RCD (Residual Current Device) ausgestaltet. Bei einem Erdschluss am oder im Teilgenerator fließt ein Fehlerstrom, der von der Überwachung des Fehlerstroms, z. B. vom RCD, erkannt wird. Dann kann der betroffene Teilgenerator über den zweiten Trennschalter, z. B. ausgeführt als ein zweipoliger Schalter, abgeschaltet werden.

Eine flexible, skalierbare Kombination aus PV-Teilgenerator und Gleichspannungswandler, die einen Elektrolyseur parallel versorgen, wird ermöglicht. Es ist auch möglich, mehrere PV-Teilgenerationen an den Gleichspannungswandler anzuschließen. Die an einen Gleichspannungswandler angeschlossenen PV-Teilgeneratoren bilden dann zusammen einen PV-Generator. Weist die Vorrichtung mehrere Gleichspannungswandler auf, ist an jeweils einen Gleichspannungswandler jeweils ein PV-Generator angeschlossen, wobei die Gleichspannungswandler eingerichtet sind, dem Elektrolyseur über den DC-Bus Gleichstromleistung zuzuführen. Der oder die PV-Generotoren können jeweils einen oder mehrere PV-Teilgeneratoren aufweisen. Hierdurch wird die Skalierbarkeit und Flexibilität der Vorrichtung verbessert.

Die Vorrichtung kann neben dem Gleichspannungswandler weitere Gleichspannungswandler aufweisen, wobei an jeden Gleichspannungswandler ein oder mehrere Teilgeneratoren angeschlossen sein können. Jeder Teilgenerator kann einen oder mehrere Hauptstrings aufweisen, wobei jeweils ein zweiter Trennschalter zwischen jeweils einem Hauptstring und dem ersten Trennschalter angeordnet ist. Es ist ebenfalls möglich, dass jeweils ein zweiter Trennschalter zwischen jeweils einem Teilgenerator und dem ersten Trennschalter angeordnet ist.

Jeder der Teilgeneratoren innerhalb einer Gleichspannungswandleranordnung ist so dimensioniert, dass ein Leckstrom unter Normalbedingungen so klein ist, dass er keinen Brand verursachen kann.

Es ist insbesondere möglich, DC-Kopplungen zu realisieren, bei denen auf der Lastseite geerdet wird. Es ist möglich, die Last, also den Elektrolyseur zu erden. Es ist eine Erdung des Mittelpunktes oder eines Pols des Elektrolyseurs (Minuspols oder Pluspol) möglich. Die Erdung kann auch an einem beliebigen Zwischenpotenzial erfolgen. Eine direkte niederohmige Erdung oder die Erdung über eine Impedanz ist möglich. Die Erdung kann sich im Betrieb durch Asymmetrien im Elektrolyseur verschieben. Der Elektrolyseur besteht aus einer Anzahl von Elektrolysezellen in Reihenschaltung. Eine Erdung kann auch optional indirekt über den parasitären Widerstand der Elektrolyseflüssigkeit erfolgen.

In einer Ausführungsform ist der Gleichspannungswandler ein Tiefsetzsteller. Ein Tiefsetzsteller wandelt eine am Eingang zugeführte Gleichspannung in eine Gleichspannung mit niedrigerem Spannungsbetrag um.

Der PV-Generator wird isoliert betrieben. Das bedeutet, dass der PV-Generator keine eigenständige Erdverbindung hat. Dies wird über die Isolationsüberwachung geprüft und der erste Trennschalter erst geschlossen, wenn die Isolation des PV-Generators sichergestellt ist. Vor jedem Zuschalten über den ersten Trennschalter wird der Isolationswiderstand jedes PV-Generators durch die Isolationsüberwachung, z. B. ausgeführt als Isolationsmessgeräte, bestimmt. Zugeschaltet wird nur, d. h. der erste Trennschalter wird nur geschlossen, wenn der Isolationswiderstand höher als ein Minimalwiderstand liegt.

Außerdem werden in einer solchen Anlage Erdungen realisiert, die bei Überschreitung eines Fehlerstroms über die Erdverbindung abgeschaltet werden können. Dies erhöht die Sicherheit der Vorrichtung.

In einer Ausführungsform ist ein Pol des Teilgenerators mit einem Pol des DC-Busses elektrisch verbindbar, wobei insbesondere im Betrieb des Teilgenerators ein Pol des Teilgenerators mit dem Pol des DC-Busses im Betrieb des Teilgenerators elektrisch verbunden ist. Bevorzugt weist der Gleichspannungswandler einen Umschalter zur Auswahl des elektrisch verbundenen Pols des Teilgenerators auf. Außerdem ist in einer Ausführungsform der Gleichspannungswandler dazu eingerichtet, die Auswahl des zu verbindenden Pols unter Berücksichtigung der Überwachung des Fehlerstroms zu treffen.

In einer Ausführungsform weist die Überwachung des Fehlerstroms koaxiale Leiter für zu überwachende-Leitungen auf. Dies hat den Vorteil, dass Streufelder im Magentkern, beispielsweise Ringkern, der Überwachung, z. B. des RCDs, nur in geringem Maße auftreten, auch wenn der Nennstrom größer wird und z. B. 250A übersteigt. In einer alternativen Ausführungsform weist die Überwachung des Fehlerstroms einen laminierten alternierenden Schichtstapel für zu überwachende Leitungen auf.

In einer Ausführungsform weist der Hauptstring mehrere parallele Strings auf, wobei die Überwachung des Fehlerstroms für den Hauptstring und/oder für die jeweiligen Strings erfolgt. Optional kann sich somit ein RCD an jedem String oder jedem Hauptstring oder an mehreren Hauptstrings eines Teilgenerators befinden. Jeder Teilgenerator besteht aus einer Anzahl Hauptstrings, die an jedem Pol zusätzlich mit einer so genannten Hauptstring-Sicherung versehen sind.

In einer Ausführungsform weist die Vorrichtung einen PV-Generator auf, der den einen Teilgenerator oder mehrere Teilgeneratoren aufweist, wobei der PV-Generator über den ersten Trennschalter an den Gleichspannungswandler angeschlossen ist, wobei der erste Trennschalter mit der Isolationsüberwachung derart gekoppelt ist, dass ein Schließen des ersten Trennschalters eine erfolgreiche Prüfung auf ausreichende Isolation des PV-Generators voraussetzt. In dieser Ausführungsform ist die Skalierbarkeit der Vorrichtung weiter verbessert.

In bevorzugten Ausführungsformen weist der Hauptstring eine Nennleistung von mehr als 500 kW und/oder der Gleichspannungswandler eine Nennleistung von mehr als 2 MW auf. Es wird möglich, PV-Generatoren mit einer großen, flexiblen Gesamtleistung, insbesondere auch über 8 MW peak, zu realisieren. Dies wird insbesondere über die Skalierung, die Isolationserkennung mit dem ersten Trennschalter und getrennte Absicherung von PV-Teilgeneratoren über den zweiten Trennschalter erreicht.

Jeder der parallelen PV-Generatoren ist mit einem Gleichspannungswandler verbunden und so ausgeführt, dass sein parasitärer Leckstrom auch im schlimmsten Fall, z. B. bei Feuchtigkeit und/oder hoher Spannung, eine bestimmte Grenze von z. B. 1,66 A nicht überschreitet. In manchen Ausführungsformen kann bei einem Kurzschluss in einem der parallelen PV-Generatoren ein Stromfluss aus den anderen Generatoren erkannt werden und durch Ansteuerung der Halbleiterschalter der anderen Gleichspannungswandler geblockt werden. In manchen Ausführungsformen kann der Teilgenerator mit Sicherungen so abgesichert sein, dass bei einem Kurzschluss in dem betroffenen Teilgenerator die anderen Gleichspannungswandler einen Strom so einprägen, dass die Sicherung oder die Sicherungen des vom Kurzschluss betroffenen Teil des PV-Generators geschlagen wird.

Zusätzlich zu den zweiten Trennschaltern der Teilgeneratoren und dem ersten Trennschalter können noch weitere DC-Schalter in den PV-Generatoren vorgesehen sein. Dies erhöht die Sicherheit weiter.

Bei einem Verfahren zum Betreiben einer Vorrichtung zur Elektrolyse aus photovoltaisch erzeugter Gleichstromleistung, mit einem Elektrolyseur und einen Gleichspannungswandler, der dem Elektrolyseur über einen DC-Bus Gleichstromleistung zuführt, die durch einen an den Gleichspannungswandler angeschlossenen photovoltaischen Teilgenerator erzeugt wird, ist der Teilgenerator schaltbar an den Gleichspannungswandler angeschlossen. Der Teilgenerator weist einen Hauptstring auf, wobei der Hauptstring eine von der Vorrichtung umfassten Überwachung des Fehlerstroms aufweist und der Hauptstring schaltbar an den Gleichspannungswandler angeschlossen ist. Das Verfahren umfasst die Schritte:
- vor dem Zuschalten des Teilgenerators zum angeschlossenen Gleichspannungswandler: Prüfen einer Isolation des Teilgenerators durch eine Isolationsüberwachung der Vorrichtung, wobei nur zugeschaltet wird, wenn eine Mindestisolation überschritten ist,
- nach dem Zuschalten des Teilgenerators: Überwachen des Hauptstrings durch die Überwachung des Fehlerstroms, wobei der Hauptstring vom Gleichspannungswandler getrennt wird, wenn der überwachte Fehlerstrom einen vorgebbaren Grenzwert übersteigt.

Im Folgenden wird die Erfindung mithilfe von Figuren dargestellt, von denen
- Fig. 1: eine Vorrichtung zur Elektrolyse aus photovoltaisch erzeugter Gleichstromleistung zeigt,
- Fig. 2: eine beispielhafte Vorrichtung zur Elektrolyse aus photovoltaisch erzeugter Gleichstromleistung zeigt und
- Fig. 3: schematisch ein Verfahren zum Betreiben einer Vorrichtung zur Elektrolyse aus photovoltaisch erzeugter Gleichstromleistung zeigt.

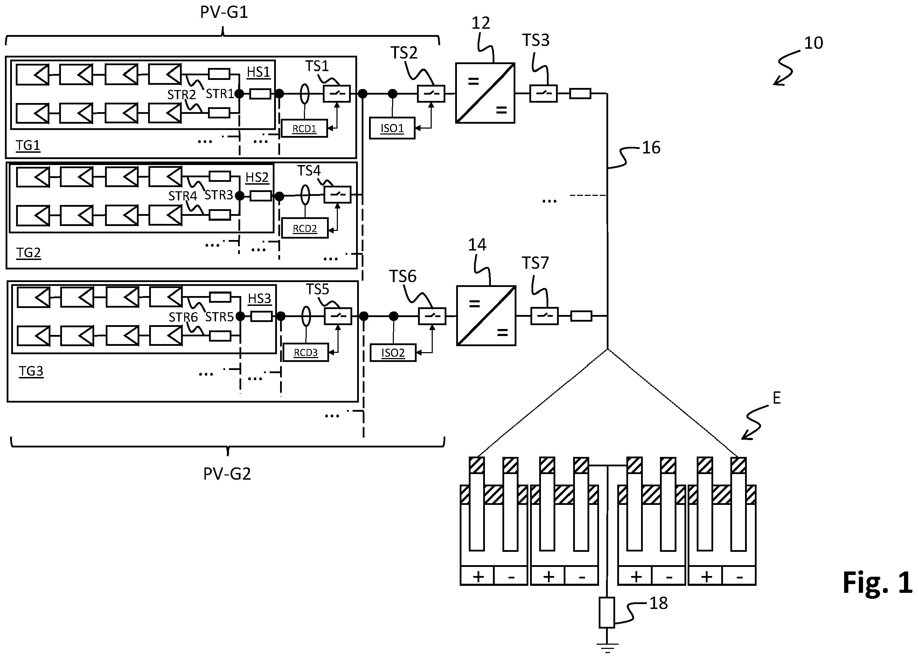

Fig. 1 zeigt eine Vorrichtung 10 zur Elektrolyse aus photovoltaisch erzeugter Gleichstromleistung. Ein Elektrolyseur E ist über einen DC-Bus mit Gleichspannungswandlern 12, 14 verbunden. Die Gleichspannungswandler 12, 14 sind über jeweils einen Trennschalter TS3, TS7 vom DC-Bus 16 trennbar. Der DC-Bus 16 ist ausgelegt, dem Elektrolyseur E elektrische Gleichstromleistung zuzuführen, mittels derer im Elektrolyseur E Elektrolyse, z. B. die Zerlegung von Wasser in Wasserstoff und Sauerstoff, durchgeführt wird. Der Elektrolyseur ist über einen ohmschen Widerstand 18 geerdet.

In Fig. 1 sind zwei Gleichspannungswandler 12, 14 dargestellt. Die Vorrichtung 10 ist skalierbar und kann auch nur einen Gleichspannungswandler 12, 14 oder mehr als zwei Gleichspannungswandler 12, 14 aufweisen. An jeden Gleichspannungswandler 12, 14 ist ein PV-Generator PV-G1, PV-G2 angeschlossen. Die von den PV-Generatoren PV-G1, PV-G2 erzeugte elektrische Leistung wird durch die Gleichspannungswandler 12, 14 umgewandelt und über den DC-Bus 16 dem Elektrolyseur E zugeführt. Jeder der PV-Generatoren PV-G1, PV-G2 ist durch einen ersten Trennschalter TS2, TS6 vom zugehörigen Gleichspannungswandler 12, 14 trennbar.

An einer ersten Seite des Gleichspannungswandlers 12 ist der PV-Generator PV-G1 angeschlossen. Auf einer zweiten Seite des Gleichspannungswandlers 12 ist der DC-Bus 16 über den Trennschalter TS3 und eine Wandler-Sicherung an den Gleichspannungswandler 12 angeschlossen. Der Gleichspannungswandler 12 ist durch den Trennschalter TS3 von dem DC-Bus 16 trennbar. Der PV-Generator PV-G1 ist über einen ersten Trennschalter TS2 vom Gleichspannungswandler 12 trennbar. Der erste Trennschalter TS2 ist mit einer Isolationsüberwachung ISO1 verbunden. Bei Inbetriebnahme der Vorrichtung 10 wird mittels der Isolationsüberwachung ISO1 überprüft, ob der PV-Generator PV-G1 elektrisch isoliert ist. Nur wenn dies der Fall ist, wird der erste Trennschalter TS2 geschlossen und der PV-Generator PV-G1 mit dem Gleichspannungswandler 12 elektrisch verbunden.

Der PV-Generator PV-G1 weist zwei Teilgeneratoren TG1, TG2 auf. Der PV-Generator PV-G1 kann auch nur einen Teilgenerator TG1, TG2 oder mehr als zwei Teilgeneratoren TG1, TG2 aufweisen. Jeder der Teilgeneratoren TG1, TG2 weist eine Fehlerstromüberwachung RCD1, RCD2, z. B. in Form einer Differenzstromerfassung (engl. Residual Current Device), auf. Die Überwachung des Fehlerstroms RCD1 überwacht den Fehlerstrom im Teilgenerator TG1 und trennt diesen über einen zweiten Trennschalter TS1 vom Gleichspannungswandler 12, falls der erfasste Fehlerstrom eine gewisse vorgebbare Schranke überschreitet. Die Überwachung des Fehlerstroms RCD2 überwacht den Fehlerstrom im Teilgenerator TG2 und trennt diesen über einen zweiten Trennschalter TS4 vom Gleichspannungswandler 12, falls der erfasste Fehlerstrom eine gewisse vorgebbare Schranke überschreitet.

Der Teilgenerator TG1 weist im dargestellten Beispiel einen Hauptstring HS1 auf, der seinerseits zwei Strings STR1, STR2 aufweist. Der Teilgenerator TG1 kann auch mehr als einen Hauptstring HS1 aufweisen. Der Hauptstring HS1 kann auch nur einen String STR1, STR2 oder mehr als zwei Strings STR1, STR2 aufweisen.

Der Teilgenerator TG2 weist im dargestellten Beispiel einen Hauptstring HS2 auf, der seinerseits zwei Strings STR3, STR4 aufweist. Der Teilgenerator TG2 kann auch mehr als einen Hauptstring HS2 aufweisen. Der Hauptstring HS2 kann auch nur einen String STR3, STR4 oder mehr als zwei Strings STR3, STR4 aufweisen.

An einer ersten Seite des Gleichspannungswandlers 14 ist der PV-Generator PV-G2 angeschlossen. Auf einer zweiten Seite des Gleichspannungswandlers 14 ist der DC-Bus 16 über den Trennschalter TS7 und einen ohmschen Widerstand an den Gleichspannungswandler 14 angeschlossen. Der Gleichspannungswandler 14 ist durch den Trennschalter TS7 von dem DC-Bus 16 trennbar. Der PV-Generator PV-G2 ist über einen ersten Trennschalter TS6 vom Gleichspannungswandler 14 trennbar. Der erste Trennschalter TS6 ist mit einer Isolationsüberwachung ISO2 verbunden. Bei Inbetriebnahme der Vorrichtung 10 wird mittels der Isolationsüberwachung ISO2 überprüft, ob der PV-Generator PV-G2 elektrisch isoliert ist. Nur wenn dies der Fall ist, wird der erste Trennschalter TS6 geschlossen und der PV-Generator PV-G2 mit dem Gleichspannungswandler 14 elektrisch verbunden.

Der PV-Generator PV-G2 weist einen Teilgenerator TG3 auf. Der PV-Generator PV-G2 kann auch mehr als einen Teilgenerator TG3 aufweisen. Der Teilgenerator TG3 weist eine Fehlerstromüberwachung RCD3, z. B. in Form einer Differenzstromerfassung auf. Die Überwachung des Fehlerstroms RCD3 überwacht den Fehlerstrom im Teilgenerator TG3 und trennt diesen über einen zweiten Trennschalter TS5 vom Gleichspannungswandler 14, falls der erfasste Fehlerstrom eine gewisse vorgebbare Schranke überschreitet.

Der Teilgenerator TG3 weist im dargestellten Beispiel einen Hauptstring HS3 auf, der seinerseits zwei Strings STR5, STR6 aufweist. Der Teilgenerator TG3 kann auch mehr als einen Hauptstring HS3 aufweisen. Der Hauptstring HS3 kann auch nur einen String STR5, STR6 oder mehr als zwei Strings STR5, STR6 aufweisen.

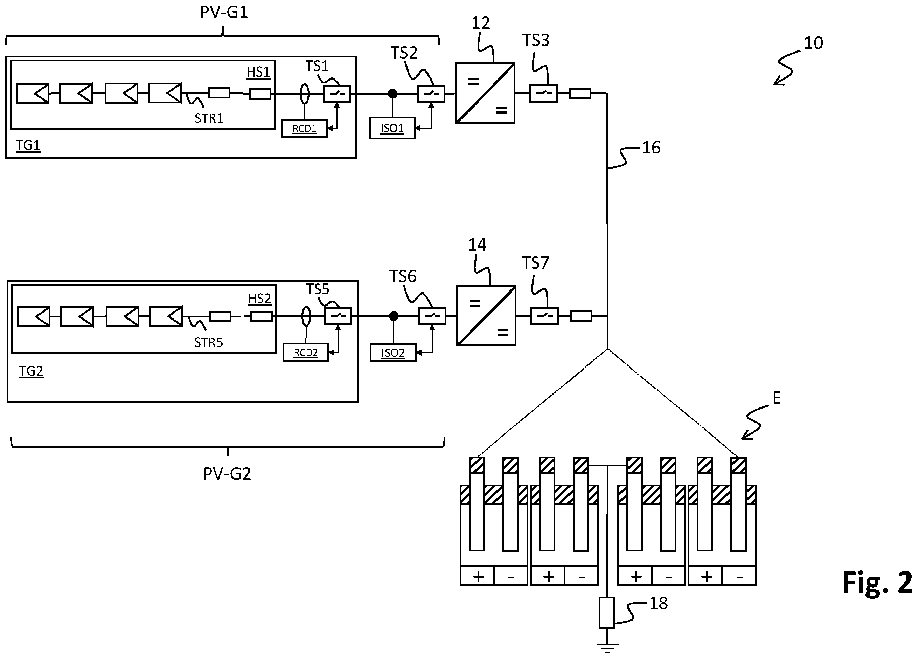

In einer Ausführungsform der Vorrichtung 10, die in Fig. 2 dargestellt ist, weist die Vorrichtung 10 den Elektrolyseur E auf, der über den ohmschen Widerstand 18 geerdet ist. Elektrische Gleichstromleistung wird dem Elektrolyseur E über den DC-Bus 16 zugeführt. Die elektrische Gleichstromleistung wird durch zwei PV-Generatoren PV-G1, PV-G2 erzeugt und durch die Gleichspannungswandler 12, 14 gewandelt und in den DC-Bus 16 eingespeist.

Der Gleichspannungswandler 12 ist über den Trennschalter TS3 und einen ohmschen Widerstand an den DC-Bus 16 angebunden und über den Trennschalter TS3 von diesem trennbar. Der Gleichspannungswandler 14 ist über den Trennschalter TS7 und einen ohmschen Widerstand an den DC-Bus 16 angebunden und über den Trennschalter TS7 von diesem trennbar.

Der PV-Generator PV-G1 weist die Isolationsüberwachung ISO1 auf, die mit dem ersten Trennschalter TS2 verbunden ist. Erst wenn eine genügende Isolation des PV-Generators PV-G1 durch die Isolationsüberwachung ISO1 erkannt wird, wird der erste Trennschalter TS2 geschlossen und der PV-Generator PV-G1 mit dem Gleichspannungswandler 12 verbunden.

Der PV-Generator PV-G1 weist einen Teilgenerator TG1 auf, der durch eine Fehlerstromüberwachung RCD1 mit zugehörigem zweitem Trennschalter TS1 gesichert ist. Wird ein zu hoher Fehlerstrom durch die Überwachung RCD1 erkannt, wird der Teilgenerator TG1 durch den zweiten Trennschalter TS1 vom Gleichspannungswandler 12 getrennt. Der Teilgenerator TG1 weist einen Hauptstring HS1 mit einem String STR1 auf.

Der PV-Generator PV-G2 weist die Isolationsüberwachung ISO2 auf, die mit dem ersten Trennschalter TS6 verbunden ist. Erst wenn eine genügende Isolation des PV-Generators PV-G2 durch die Isolationsüberwachung ISO2 erkannt wird, wird der erste Trennschalter TS6 geschlossen und der PV-Generator PV-G2 mit dem Gleichspannungswandler 14 verbunden.

Der PV-Generator PV-G2 weist einen Teilgenerator TG3 auf, der durch eine Fehlerstromüberwachung RCD3 mit zugehörigem zweitem Trennschalter TS5 gesichert ist. Wird ein zu hoher Fehlerstrom durch die Überwachung RCD3 erkannt, wird der Teilgenerator TG3 durch den zweiten Trennschalter TS5 vom Gleichspannungswandler 14 getrennt. Der Teilgenerator TG3 weist einen Hauptstring HS3 mit einem String STR5 auf.

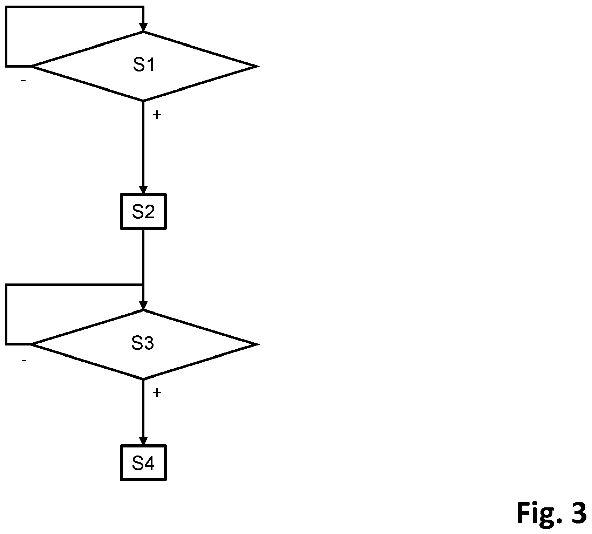

Fig. 3 zeigt schematisch ein Ablaufdiagramm für ein Verfahren zum Betreiben einer Vorrichtung 10.

Schritt S1 wird bei Inbetriebnahme der Vorrichtung 10 ausgeführt. Erkennt die Isolationsüberwachung ISO1, ISO2, ISO3 in Schritt S1 eine genügende Isolierung des zugeordneten PV-Generators PV-G1, PV-G2 (vgl. Fig.1 + Fig. 2), so wird in Schritt S2 der zugeordnete erste Trennschalter TS2, TS6 (vgl. Fig.1 + Fig. 2)geschlossen und der PV-Generator PV-G1, PV-G2 mit dem zugeordneten Gleichspannungswandler 12, 14 (vgl. Fig.1 + Fig. 2) elektrisch verbunden.

Schritt S3 wird im Betrieb der Vorrichtung 10 ausgeführt. In Schritt S3 wird mittels der Überwachung RCD1, RCD2, RCD3 überwacht, ob ein Fehlerstrom in jeweils zugeordneten Teilgeneratoren TG1, TG2, TG3 (vgl. Fig.1 + Fig. 2) einen vorgebbaren Schwellwert überschreitet. Ist dies der Fall, so wird in Schritt S4 derjenige Teilgenerator TG1, TG2, TG3, für den ein Fehlerstrom erkannt wurde, der den Schwellwert überschreitet, mittels des zugeordneten zweiten Trennschalters TS1, TS4, TS5 (vgl. Fig.1 + Fig. 2) vom zugeordneten Gleichspannungswandler 12, 14 (vgl. Fig.1 + Fig. 2) getrennt.

### Bezugszeichenliste

- 10: Vorrichtung zur Elektrolyse
- 12, 14: Gleichspannungswandler
- 16: DC-Bus
- 18: ohmscher Widerstand
- E: Elektrolyseur
- PV-G1, PV-G2: PV-Generator
- TG1, TG2, TG3: Teilgenerator
- HS1, HS2, HS3: Hauptstring
- STR1, STR2, STR3, STR4, STR5, STR6: String
- TS1, TS4, TS5: zweiter Trennschalter
- TS2, TS6: erster Trennschalter
- TS3, TS7: dritter Trennschalter
- RCD1, RCD2, RCD3: Überwachung
- ISO1, ISO2: Isolationsüberwachung
- S1, S2, S3, S4: Verfahrensschritte

## Patentansprüche

1. Vorrichtung (10) zur Elektrolyse aus photovoltaisch erzeugter Gleichstromleistung, umfassend:
- einen Elektrolyseur (E),
- einen Gleichspannungswandler (12, 14), der eingerichtet ist, dem Elektrolyseur (E) über einen DC-Bus (16) Gleichstromleistung zuzuführen, wobei die Gleichstromleistung durch einen an den Gleichspannungswandler (12, 14) angeschlossenen photovoltaischen Teilgenerator (TG1, TG2, TG3) erzeugbar ist,
wobei der Teilgenerator (TG1, TG2, TG3) über einen ersten Trennschalter (TS2, TS6) der Vorrichtung (10) an den Gleichspannungswandler (12, 14) angeschlossen ist, wobei der erste Trennschalter (TS2, TS6) mit einer Isolationsüberwachung (ISO1, ISO2) der Vorrichtung (10) derart gekoppelt ist, dass ein Schließen des ersten Trennschalters (TS2, TS6) eine erfolgreiche Prüfung auf ausreichende Isolation des Teilgenerators (TG1, TG2, TG3) voraussetzt,
wobei der Teilgenerator (TG1, TG2, TG3) einen Hauptstring (HS1, HS2, HS3) aufweist, wobei zwischen dem Hauptstring (HS1, HS2, HS3) und dem ersten Trennschalter (TS2, TS6) ein zweiter Trennschalter (TS1, TS4, TS5) der Vorrichtung (10) angeordnet ist, der mit einer von der Vorrichtung (10) umfassten Überwachung (RCD1, RCD2, RCD3) eines Fehlerstroms des Hauptstrings (HS1, HS2, HS3) derart gekoppelt ist, dass im Falle einer Überschreitung eines vorgebbaren Grenzwerts des Fehlerstroms der zweite Trennschalter (TS1, TS4, TS5) geöffnet wird.

2. Vorrichtung nach Anspruch 1, wobei der Gleichspannungswandler (12, 14) ein Tiefsetzsteller ist.

3. Vorrichtung nach Anspruch 1 oder 2, wobei ein Pol des Teilgenerators (TG1, TG2, TG3) mit einem Pol des DC-Busses (16) elektrisch verbindbar ist, wobei insbesondere im Betrieb des Teilgenerators (TG1, TG2, TG3) ein Pol des Teilgenerators (TG1, TG2, TG3) mit dem Pol des DC-Busses (16) elektrisch verbunden ist.

4. Vorrichtung nach Anspruch 3, wobei der Gleichspannungswandler (12, 14) einen Umschalter zur Auswahl des elektrisch verbundenen Pols des Teilgenerators (TG1, TG2, TG3) aufweist.

5. Vorrichtung nach Anspruch 4, wobei der Gleichspannungswandler (12, 14) dazu eingerichtet ist, die Auswahl des zu verbindenden Pols unter Berücksichtigung der Überwachung (RCD1, RCD2, RCD3) des Fehlerstroms zu treffen.

6. Vorrichtung nach einem der vorangehenden Ansprüche, wobei die Überwachung (RCD1, RCD2, RCD3) des Fehlerstroms koaxiale Leiter für zu überwachende-Leitungen aufweist.

7. Vorrichtung nach einem der Ansprüche 1 bis 5, wobei die Überwachung (RCD1, RCD2, RCD3) des Fehlerstroms einen laminierten alternierenden Schichtstapel für zu überwachende Leitungen aufweist.

8. Vorrichtung nach einem der vorangehenden Ansprüche, wobei der Hauptstring (HS1, HS2, HS3) mehrere parallele Strings (STR1, STR2, STR3, STR4, STR5, STR6) aufweist und wobei die Überwachung (RCD1, RCD2, RCD3) des Fehlerstroms für den Hauptstring (HS1, HS2, HS3) und/oder für die jeweiligen Strings (STR1, STR2, STR3, STR4, STR5, STR6) erfolgt.

9. Vorrichtung nach einem der vorangehenden Ansprüche, wobei der Teilgenerator (TG1, TG2, TG3) mehrere parallele Hauptstrings (HS1, HS2, HS3) aufweist, wobei jeweils ein zweiter Trennschalter (TS1, TS4, TS5) zwischen jeweils einem Hauptstring (HS1, HS2, HS3) und dem ersten Trennschalter (TS2, TS6) angeordnet ist.

10. Vorrichtung nach einem der vorangehenden Ansprüche, wobei die Vorrichtung einen PV-Generator (PV-G1, PV-G2) aufweist, der den einen Teilgenerator (TG1, TG2, TG3) oder mehrere Teilgeneratoren (TG1, TG2, TG3) aufweist, wobei der PV-Generator (PV-G1, PV-G2) über den ersten Trennschalter (TS2, TS6) an den Gleichspannungswandler (12, 14) angeschlossen ist, wobei der erste Trennschalter (TS2, TS6) mit der Isolationsüberwachung (ISO1, ISO2) derart gekoppelt ist, dass ein Schließen des ersten Trennschalters (TS2, TS6) eine erfolgreiche Prüfung auf ausreichende Isolation des PV-Generators (PV-G1, PV-G2) voraussetzt.

11. Vorrichtung nach Anspruch 10, wobei die Vorrichtung mehrere PV-Generatoren (PV-G1, PV-G2) aufweist, wobei jeweils ein PV-Generator (PV-G1, PV-G2) an einen Gleichspannungswandler (12, 14) angeschlossen ist und die Gleichspannungswandler (12, 14) eingerichtet sind, dem Elektrolyseur (E) über den DC-Bus (16) Gleichstromleistung zuzuführen.

12. Vorrichtung nach einem der vorangehenden Ansprüche, wobei der Hauptstring (HS1, HS2, HS3) eine Nennleistung von mehr als 500 kW aufweist.

13. Vorrichtung nach einem der vorangehenden Ansprüche, wobei der Gleichspannungswandler (12, 14) eine Nennleistung von mehr als 2 MW aufweist.

14. Verfahren zum Betreiben einer Vorrichtung (10) zur Elektrolyse aus photovoltaisch erzeugter Gleichstromleistung, umfassend einen Elektrolyseur (E) und einen Gleichspannungswandler (12, 14), der dem Elektrolyseur über einen DC-Bus Gleichstromleistung zuführt, die durch einen an den Gleichspannungswandler (12, 14) angeschlossenen photovoltaischen Teilgenerator (TG1, TG2, TG3) erzeugt wird, wobei der Teilgenerator (TG1, TG2, TG3) schaltbar an den Gleichspannungswandler (12, 14) angeschlossen ist, wobei der Teilgenerator (TG1, TG2, TG3) einen Hauptstring (HS1, HS2, HS3) aufweist, wobei der Hauptstring (HS1, HS2, HS3) eine von der Vorrichtung (10) umfassten Überwachung (RCD1, RCD2, RCD3) des Fehlerstroms aufweist und der Hauptstring (HS1, HS2, HS3) schaltbar an den Gleichspannungswandler (12, 14) angeschlossen ist, wobei das Verfahren die Schritte aufweist:
- vor dem Zuschalten des Teilgenerators (TG1, TG2, TG3) zum angeschlossenen Gleichspannungswandler (12, 14): Prüfen einer Isolation des Teilgenerators durch eine Isolationsüberwachung (ISO1, ISO2) der Vorrichtung (10), wobei nur zugeschaltet wird, wenn eine Mindestisolation überschritten ist,
- nach dem Zuschalten des Teilgenerators (TG1, TG2, TG3): Überwachen des Hauptstrings (HS1, HS2, HS3) durch die Überwachung (RCD1, RCD2, RCD3) des Fehlerstroms, wobei der Hauptstring (HS1, HS2, HS3) vom Gleichspannungswandler (12, 14) getrennt wird, wenn der überwachte Fehlerstrom einen vorgebbaren Grenzwert übersteigt.

## Claims

1. A device (10) for electrolysis from photovoltaically generated DC power, comprising:
- an electrolyzer (E),
- a DC/DC converter (12, 14) configured to feed DC power to the electrolyzer (E) via a DC bus (16), wherein the DC power can be generated by a photovoltaic sub-generator (TG1, TG2, TG3) connected to the DC/DC converter (12, 14),
wherein the sub-generator (TG1, TG2, TG3) is connected to the DC/DC converter (12, 14) via a first disconnector (TS2, TS6) of the device (10), wherein the first disconnector (TS2, TS6) is coupled to an isolation monitor (ISO1, ISO2) of the device (10) in such a way that closure of the first disconnector (TS2, TS6) requires a successful check for sufficient isolation of the sub-generator (TG1, TG2, TG3),
wherein the sub-generator (TG1, TG2, TG3) comprises a main string (HS1, HS2, HG3), wherein a second disconnector (TS1, TS4, TS5) of the device (10) is arranged between the main string (HS1, HS2, HS3) and the first disconnector (TS2, TS6), which second disconnector is coupled to a fault current monitor (RCD1, RCD2, RCD3) of the main string (HS1, HS2, HS3), which is included in the device (10), in such a way that the second disconnector (TS1, TS4, TS5) is opened in the event that a predefinable limit value of the fault current is exceeded.

2. The device according to claim 1, wherein the DC/DC converter (12, 14) is a step-down converter.

3. The device according to claim 1 or 2, wherein one pole of the sub-generator (TG1, TG2, TG3) can be electrically connected to one pole of the DC bus (16), wherein, in particular during operation of the sub-generator (TG1, TG2, TG3), one pole of the sub-generator (TG1, TG2, TG3) is electrically connected to the pole of the DC bus (16).

4. The device according to claim 3, wherein the DC/DC converter (12, 14) has a change-over switch for selecting the electrically connected pole of the sub-generator (TG1, TG2, TG3).

5. The device according to claim 4, wherein the DC/DC converter (12, 14) is configured to make the selection of the pole to be connected in consideration of the fault current monitor (RCD1, RCD2, RCD3).

6. The device according to any of the preceding claims, wherein the fault current monitor (RCD1, RCD2, RCD3) comprises coaxial conductors for lines to be monitored.

7. The device according to any of claims 1 to 5, wherein the fault current monitor (RCD1, RCD2, RCD3) comprises a laminated alternating layer stack for lines to be monitored.

8. The device according to any of the preceding claims, wherein the main string (HS1, HS2, HS3) has a plurality of parallel strings (STR1, STR2, STR3, STR4, STR5, STR6), and wherein the fault current monitoring (RCD1, RCD2, RCD3) for the main string (HS1, HS2, HS3) and/or for the respective strings (STR1, STR2, STR3, STR4, STR5, STR6) takes place.

9. The device according to any of the preceding claims, wherein the sub-generator (TG1, TG2, TG3) has a plurality of parallel main strings (HS1, HS2, HS3), wherein a second disconnector (TS1, TS4, TS5) is respectively arranged between a main string (HS1, HS2, HS3) and the first disconnector (TS2, TS6).

10. The device according to any of the preceding claims, wherein the device comprises a PV generator (PV-G1, PV-G2) with a sub-generator (TG1, TG2, TG3) or a plurality of sub-generators (TG1, TG2, TG3), wherein the PV generator (PV-G1, PV-G2) is connected to the DC/DC converter (12, 14) via the first disconnector (TS2, TS6), wherein the first disconnector (TS2, TS6) is coupled to the isolation monitor (ISO1, ISO2) in such a way that closure of the first disconnector (TS2, TS6) requires a successful check for sufficient isolation of the PV generator (PV-G1, PV-G2).

11. The device according to claim 10, wherein the device comprises a plurality of PV generators (PV-G1, PV-G2), wherein a PV generator (PV-G1, PV-G2) is connected to a DC/DC converter (12, 14) and the DC/DC converters (12, 14) are designed to feed DC power to the electrolyzer (E) via the DC bus (16).

12. The device according to any of the preceding claims, wherein the main string (HS1, HS2, HS3) has a rated power of more than 500 kW

13. The device according to any of the preceding claims, wherein the DC/DC converter (12, 14) has a rated power of more than 2 MW.

14. A method of operating a device (10) for electrolysis from photovoltaically generated DC power, comprising an electrolyzer (E) and a DC/DC converter (12, 14) that feeds the electrolyzer with DC power via a DC bus, wherein the DC power is generated by a photovoltaic sub-generator (TG1, TG2, TG3) connected to the DC/DC converter (12, 14), wherein the sub-generator (TG1, TG2, TG3) is switchably connected to the DC/DC converter (12, 14), wherein the sub-generator (TG1, TG2, TG3) comprises a main string (HS1, HS2, HS3), wherein the main string (HS1, HS2, HS3) comprises a fault current monitor (RCD1, RCD2, RCD3) f and the main string (HS1, HS2, HS3) is switchably connected to the DC/DC converter (12, 14), the method comprising the steps of:
- before the sub-generator (TG1, TG2, TG3) is switched on to the connected DC/DC converter (12, 14): checking an isolation of the sub-generator using an isolation monitor (ISO1, ISO2) of the device (10), wherein switching on only takes place if a minimum isolation is exceeded,
- after the sub-generator (TG1, TG2, TG3) has been switched on: monitoring the main string (HS1, HS2, HS3) by the fault current monitor (RCD1, RCD2, RCD3), wherein the main string (HS1, HS2, HS3) is disconnected from the DC/DC converter (12, 14) if the monitored fault current exceeds a predefinable limit value.

## Revendications

1. Dispositif (10) pour l'électrolyse à partir d'une puissance continue produite par un système photovoltaïque, comprenant :
- un électrolyseur (E),
- un convertisseur de tension continue (12, 14) qui est conçu pour fournir une puissance de courant continu à l'électrolyseur (E) par l'intermédiaire d'un bus continu (16), la puissance de courant continu pouvant être générée par un générateur partiel photovoltaïque (TG1, TG2, TG3) raccordé au convertisseur de tension continue (12, 14),
le générateur partiel (TG1, TG2, TG3) étant raccordé au convertisseur de tension continue (12, 14) par l'intermédiaire d'un premier sectionneur (TS2, TS6) du dispositif (10), le premier sectionneur (TS2, TS6) étant couplé à une surveillance d'isolation (ISO1, ISO2) du dispositif (10) de telle sorte qu'une fermeture du premier sectionneur (TS2, TS6) suppose un contrôle réussi d'une isolation suffisante du générateur partiel (TG1, TG2, TG3),
le générateur partiel (TG1, TG2, TG3) présentant une chaîne principale (HS1, HS2, HS3), un deuxième sectionneur (TS1, TS4, TS5) du dispositif (10) étant disposé entre la chaîne principale (HS1, HS2, HS3) et le premier sectionneur (TS2, TS6), qui est couplé à une surveillance (RCD1, RCD2, RCD3) d'un courant de défaut de la chaîne principale (HS1, HS2, HS3) comprise dans le dispositif (10) de telle sorte que le deuxième sectionneur (TS1, TS4, TS5) est ouvert en cas de dépassement d'une valeur limite prédéterminable du courant de défaut.

2. Dispositif selon la revendication 1, dans lequel le convertisseur de tension continue (12, 14) est un convertisseur abaisseur.

3. Dispositif selon la revendication 1 ou 2, dans lequel un pôle du sous-générateur (TG1, TG2, TG3) peut être relié électriquement à un pôle du bus DC (16), dans lequel, en particulier pendant le fonctionnement du sous-générateur (TG1, TG2, TG3), un pôle du sous-générateur (TG1, TG2, TG3) est relié électriquement au pôle du bus DC (16).

4. Dispositif selon la revendication 3, dans lequel le convertisseur continu-continu (12, 14) comprend un commutateur pour sélectionner le pôle connecté électriquement du générateur partiel (TG1, TG2, TG3).

5. Dispositif selon la revendication 4, dans lequel le convertisseur de tension continue (12, 14) est agencé pour effectuer la sélection du pôle à connecter en tenant compte de la surveillance (RCD1, RCD2, RCD3) du courant de défaut.

6. Dispositif selon l'une des revendications précédentes, dans lequel la surveillance (RCD1, RCD2, RCD3) du courant de défaut comporte des conducteurs coaxiaux pour des lignes à surveiller.

7. Dispositif selon l'une des revendications 1 à 5, dans lequel la surveillance (RCD1, RCD2, RCD3) du courant de défaut comporte un empilement de couches alternées stratifiées pour des lignes à surveiller.

8. Dispositif selon l'une des revendications précédentes, dans lequel la chaîne principale (HS1, HS2, HS3) comporte plusieurs chaînes parallèles (STR1, STR2, STR3, STR4, STR5, STR6) et dans lequel la surveillance (RCD1, RCD2, RCD3) du courant de défaut est effectuée pour la chaîne principale (HS1, HS2, HS3) et/ou pour les chaînes respectives (STR1, STR2, STR3, STR4, STR5, STR6).

9. Dispositif selon l'une des revendications précédentes, dans lequel le générateur partiel (TG1, TG2, TG3) comporte plusieurs chaînes principales parallèles (HS1, HS2, HS3), un deuxième sectionneur (TS1, TS4, TS5) étant respectivement disposé entre une chaîne principale respective (HS1, HS2, HS3) et le premier sectionneur (TS2, TS6).

10. Dispositif selon l'une des revendications précédentes, dans lequel le dispositif comprend un générateur PV (PV-G1, PV-G2) comprenant le générateur partiel (TG1, TG2, TG3) ou plusieurs générateurs partiels (TG1, TG2, TG3), le générateur PV (PV-G1, PV-G2) étant relié au premier sectionneur (TS2, TS6) est raccordé au convertisseur de tension continue (12, 14), le premier sectionneur (TS2, TS6) étant couplé au contrôle d'isolation (ISO1, ISO2) de telle sorte qu'une fermeture du premier sectionneur (TS2, TS6) suppose un contrôle réussi de l'isolation suffisante du générateur PV (PV-G1, PV-G2).

11. Dispositif selon la revendication 10, dans lequel le dispositif comporte plusieurs générateurs PV (PV-G1, PV-G2), un générateur PV (PV-G1, PV-G2) étant respectivement raccordé à un convertisseur continu-continu (12, 14) et les convertisseurs de tension continue (12, 14) étant agencés pour fournir de la puissance en courant continu à l'électrolyseur (E) via le bus continu (16).

12. Dispositif selon l'une des revendications précédentes, dans lequel la chaîne principale (HS1, HS2, HS3) présente une puissance nominale supérieure à 500 kW.

13. Dispositif selon l'une des revendications précédentes, dans lequel le convertisseur de tension continue (12, 14) présente une puissance nominale supérieure à 2 MW.

14. Procédé d'exploitation d'un dispositif (10) d'électrolyse à partir d'une puissance de courant continu produite par voie photovoltaïque, comprenant un électrolyseur (E) et un convertisseur de tension continue (12, 14) qui fournit à l'électrolyseur, par l'intermédiaire d'un bus continu, une puissance de courant continu qui est produite par un générateur photovoltaïque partiel (TG1, TG2, TG3) raccordé au convertisseur de tension continue (12, 14), le générateur partiel (TG1, TG2, TG3) est raccordé de manière commutable au convertisseur de tension continue (12, 14), le générateur partiel (TG1, TG2, TG3) présentant une chaîne principale (HS1, HS2, HS3), la chaîne principale (HS1, HS2, HS3) présente un contrôle (RCD1, RCD2, RCD3) du courant de défaut compris par le dispositif (10) et la chaîne principale (HS1, HS2, HS3) est raccordée de manière commutable au convertisseur de tension continue (12, 14), le procédé comprenant les étapes suivantes :
- avant de connecter le générateur partiel (TG1, TG2, TG3) au convertisseur de tension continue (12, 14) raccordé : vérification d'une isolation du générateur partiel par un contrôle d'isolation (ISO1, ISO2) du dispositif (10), le branchement n'étant effectué que si une isolation minimale est dépassée,
- après la mise en circuit du générateur partiel (TG1, TG2, TG3): surveillance de la chaîne principale (HS1, HS2, HS3) par la surveillance (RCD1, RCD2, RCD3) du courant de défaut, la chaîne principale (HS1, HS2, HS3) étant déconnectée du convertisseur de tension continue (12, 14) lorsque le courant de défaut surveillé dépasse une valeur limite pouvant être prédéfinie.
